Europäisches Patentamt

European Patent Office

Office européen des brevets

(11) Numéro de publication : **0 393 605 B1**

(12) **FASCICULE DE BREVET EUROPEEN**

(19)

(45) Date de publication du fascicule du brevet :
08.07.92 Bulletin 92/28

(21) Numéro de dépôt : **90107300.7**

(22) Date de dépôt : **18.04.90**

(51) Int. Cl.⁵ : **G04C 13/11,** G04C 3/00

(54) **Pièce d'horlogerie comportant au moins deux moteurs.**

(30) Priorité : **17.11.89 CH 4147/89**
**21.04.89 CH 1535/89**

(43) Date de publication de la demande :
**24.10.90 Bulletin 90/43**

(45) Mention de la délivrance du brevet :
**08.07.92 Bulletin 92/28**

(84) Etats contractants désignés :
**DE FR GB**

(56) Documents cités :
**EP-A- 0 124 853**
**EP-A- 0 216 018**
**EP-A- 0 312 946**
**FR-A- 2 353 889**

(73) Titulaire : **ETA S.A., Fabriques d'Ebauches
Schild-Rust-Strasse 17
CH-2540 Granges (CH)**

(72) Inventeur : **Triponez, André
La Communance 94
CH-2516 Lamboing (CH)**

(74) Mandataire : **de Raemy, Jacques et al
ICB Ingénieurs Conseils en Brevets SA
Passage Max. Meuron 6
CH-2001 Neuchâtel (CH)**

## Description

La présente invention est relative à une pièce d'horlogerie à affichage analogique comportant au moins deux moteurs électromagnétiques, lesdits moteurs comportant chacun un rotor aimanté monté à rotation autour d'un arbre et un stator formé d'une plaque comportant au moins deux épanouissements polaires entourant le rotor, ladite plaque étant couplée magnétiquement à au moins un noyau sur lequel est enroulée une bobine d'excitation.

Des pièces d'horlogerie comportant plus d'un moteur ont été maintes fois proposées. Une construction de ce genre est montrée par exemple dans le document GB-A-2 005 875 qui décrit un chronographe équipé d'un oscillateur à quartz comportant deux entraînements individuels des aiguilles comprenant chacun un moteur pas à pas et un rouage entreposé entre le pignon du moteur et la roue dentée solidaire de l'axe de l'aiguille. Il n'y a donc pas là prise directe entre pignon et roue dentée comme cela apparaîtra dans la présente invention.

Pour éviter tout rouage entre rotor d'entraînement et aiguille indicatrice, le document EP-A- 0 312 946 propose une pièce d'horlogerie comportant deux moteurs multipolaires dont les rotors sont coaxiaux, chaque rotor entraînant une aiguille indicatrice. Le rotor d'un des moteurs est monté sur un arbre qui porte une aiguille de secondes et le rotor de l'autre moteur est monté sur le canon d'une chaussée traversée par ledit arbre, ce canon portant une aiguille de minutes. Si cette construction présente l'avantage d'un entraînement direct, en ce sens que les aiguilles sont solidaires des rotors qui les entraînent, il faut remarquer que ladite construction fait appel à des moteurs très particuliers dont les rotors progressent à raison d'un grand nombre de pas par tour, notamment 60 pas. De tels moteurs ne sont pas faciles à réaliser et la simplicité apparente de la suppression du rouage doit se payer par la complexité de la réalisation du moteur et de la commande de ce moteur.

Pour obvier aux inconvénients cités, la pièce d'horlogerie selon l'invention, en même temps qu'elle propose une construction permettant d'économiser de la place en hauteur, de diminuer le nombre de composants mécaniques en mouvement et de simplifier la construction et le montage, est caractérisée par le fait qu'elle comporte en outre un tube de guidage arrangé pour recevoir, à l'intérieur, un arbre à la première extrémité duquel est emmanchée une aiguille propre à indiquer une première unité de temps et à la seconde extrémité duquel est assujettie une première roue dentée en prise avec un premier pignon placé en bout de l'arbre de l'un des rotors, et à l'extérieur, un canon à la première extrémité duquel est emmanchée une aiguille propre à indiquer une seconde unité de temps et à la seconde extrémité duquel est assujettie une seconde roue dentée en prise avec un second pignon placé en bout de l'arbre de l'autre des rotors, les arbres desdits rotors étant disposés en tête-bêche de telle manière que l'extrémité libre dudit premier pignon s'étende dans une direction opposée à celle dans laquelle s'étend l'extrémité libre dudit second pignon.

Des caractéristiques spécifiques à la présente invention vont être expliquées maintenant dans la description qui va suivre, description illustrée à titre d'exemple au moyen du dessin dans lequel:

– La figure 1 est une vue en plan de la pièce d'horlogerie selon un premier mode d'exécution de l'invention, vue qui ne retient que les parties essentielles à la compréhension de l'invention, le mécanisme étant dépouillé de la boîte dans lequel il est monté, ainsi que des aiguilles indicatrices du temps et du cadran;

– La figure 2 est une coupe à échelle agrandie selon la ligne II-II de la figure 1, figure 2 dans laquelle les aiguilles ont été représentées, la ligne I-I simulant un plan de coupe au-dessous duquel la vue en plan de la figure 1 est représentée;

– La figure 3 est une vue en plan partielle de la pièce d'horlogerie selon un second mode d'exécution de l'invention;

– La figure 4 est un dessin de détail à échelle agrandie du stator des moteurs présenté en figure 3; et

– La figure 5 est une coupe selon la ligne brisée IV-IV de la figure 3.

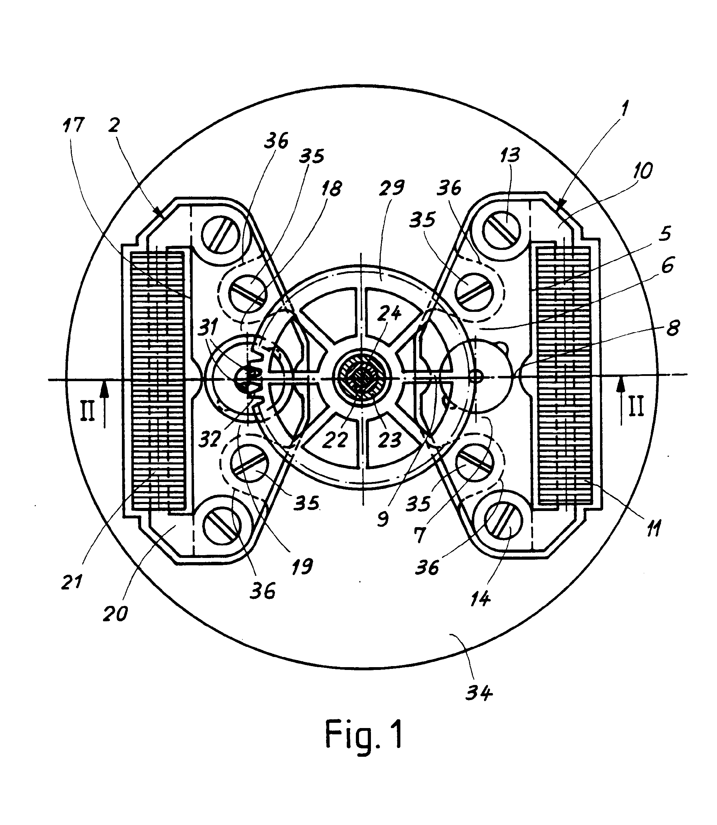

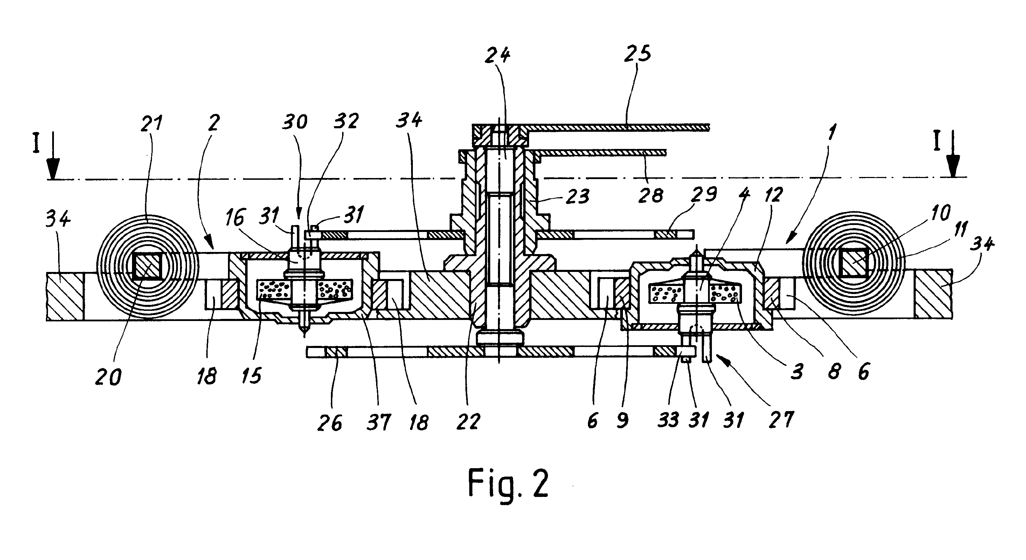

Les figures 1 et 2 présentent respectivement une vue en plan et une coupe d'une pièce d'horlogerie exécutée selon l'invention et selon un premier mode d'exécution. Tout à fait généralement cette pièce d'horlogerie à affichage analogique comporte deux moteurs électromagnétiques 1 et 2 de préférence du type pas à pas. Le moteur 1 comprend un rotor aimanté 3 monté à rotation autour d'un arbre 4 et un stator formé d'une plaque 5 comportant deux épanouissement polaires 6 et 7 entourant le rotor. De manière connue, les épanouissements sont formés grâce à deux étranglements ou isthmes 8 et 9. La plaque 5 est couplée magnétiquement à un noyau 10 sur lequel est enroulée une bobine d'excitation 11. Ce couplage est réalisé au moyen de deux vis 13 et 14 qui fixent le noyau 10 sur la plaque 5. Dans la réalisation montrée dans les figures 1 et 2, le rotor 3 est monté dans une cage 12 forcée dans le stator. Un tel mode de réalisation a déjà été décrit dans le document CH-A-639 525 correspondant au document US-A-4 483 627. Par analogie, le moteur 2 comprend un rotor aimanté 15 monté à rotation autour d'un arbre 16 et un stator formé d'une plaque 17 comportant deux épanouissements polaires 18 et 19 entourant le rotor. La plaque 17 est couplée magnétiquement à un noyau 20 sur lequel est enroulée une bobine d'excitation 21.

Comme le montrent les figures 1 et 2, la pièce d'horlogerie comporte encore un tube de guidage 22. Ce tube recoit, à l'intérieur, un arbre 24 à la première extrémité duquel est emmanchée une aiguille 25 propre à indiquer une première unité de temps (par exemple la minute) et à la seconde extrémité duquel est assujettie une première roue dentée 26 en prise avec un premier pignon 27 placé en bout de l'arbre 4 du rotor 3. Le tube de guidage 22 recoit également, à l'extérieur, un canon 23 à la première extrémité duquel est emmanchée une aiguille 28 propre à indiquer une seconde unité de temps (par exemple l'heure) et à la seconde extrémité duquel est assujettie une seconde roue dentée 29 en prise avec un second pignon placé en bout de l'arbre 16 du rotor 15. Dans l'exécution montrée en exemple, les pignons 27 et 30 sont constitués chacun de deux ergots 31. Les figures montrent que les ergots 31 du pignon 30 engrènent avec la denture 32 de la roue 29, de même que les ergots 31 du pignon 27 engrènent avec la denture 33 de la roue 26.

Ainsi que le montre particulièrement bien la figure 2, les arbres 4 et 16 des rotors 3 et 15 sont disposés en tête-bêche de telle sorte que l'extrémité libre du premier pignon 27 s'étend dans une direction opposée à celle dans laquelle s'étend l'extrémité libre du second pignon 30.

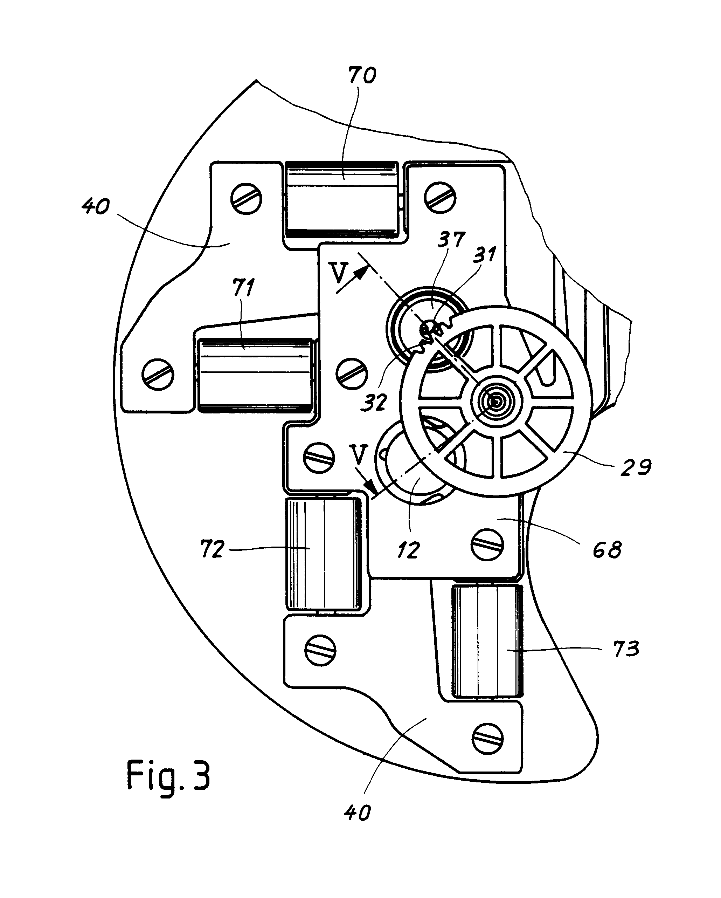

Les explications qui viennent d'être données ci-dessus ont décrit l'essentiel de l'invention en se servant du premier mode d'exécution représenté aux figures 1 et 2. On aurait pu se servir des figures 3, 4 et 5 montrant un second mode d'exécution de l'invention pour donner les mêmes explications de principe, ces dernières figures montrant à l'évidence, comme on le verra de la description qui suit, un concept constructif identique à celui des figures 1 et 2.

Le premier mode d'exécution de l'invention relatif aux figures 1 et 2 est caractérisé principalement par le fait que les moteurs 1 et 2 sont des unités indépendantes comportant chacun un stator et un rotor. Chaque moteur est monté à part, pour lui-même, puis est fixé sur une platine 34 supportant tout le mécanisme de la pièce d'horlogerie ainsi que la source d'énergie et les circuits électriques, ces derniers n'étant par représentés au dessin. Les moteurs 1 et 2 sont ensuite fixés sur la platine 34 au moyen de vis 35 traversant les plaques statoriques 5 et 17 et vissées dans des oreilles 36 faisant corps avec la platine. Dans ce premier mode d'exécution, on voit (figure 2) qu'il suffit de monter la cage 12 du rotor 3 de manière inverse au montage de la cage 37 du rotor 15. On observera également que, dans ce mode d'exécution, le tube de guidage 22 est monté directement sur la platine et que, de ce fait, les roues 26 et 29 sont situées coaxialement de part et d'autre de la platine 34.

La figure 1 montre deux moteurs diamétralement opposés. On pourrait les rapprocher l'un de l'autre pour ménager plus de place aux autres éléments composant la pièce d'horlogerie. De même chacun des moteurs ne comporte qu'une bobine. On pourrait avoir un moteur à deux bobines comme cela a été décrit, par exemple, dans le document US-A 4 371 821.

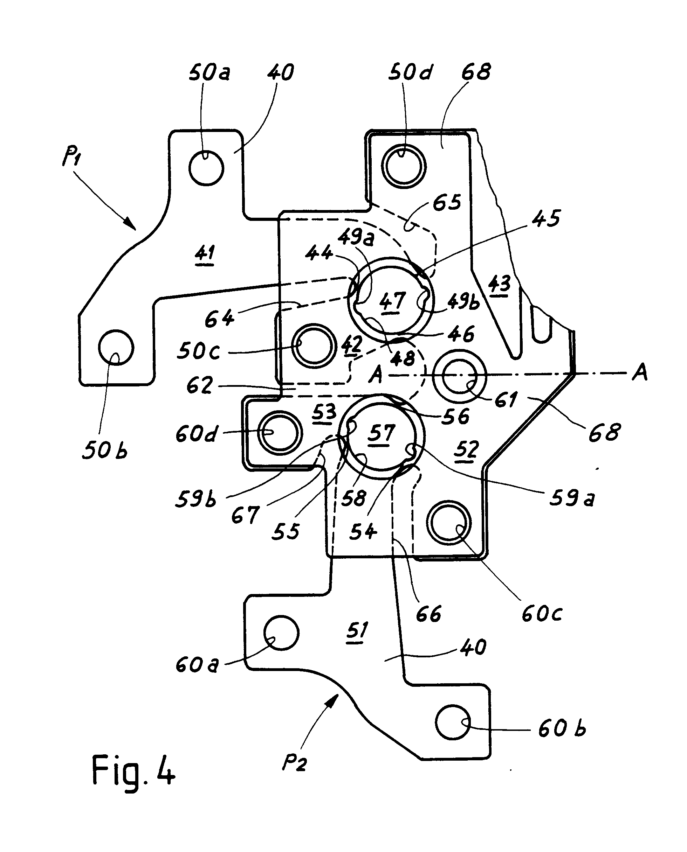

Le second mode d'exécution de l'invention est présenté aux figures 3, 4 et 5. On retrouve dans ce second monde des éléments constitutifs semblables à ceux déjà décrits à propos du premier mode. Pour ces éléments communs aux deux constructions on utilisera donc les mêmes chiffres de référence. Ce second mode d'exécution se distingue du premier par le fait que les stators des moteurs sont découpés dans une plaque unique 40 découpée de telle façon qu'elle présente les épanouissements polaires nécessaires au fonctionnement indépendant de chaque moteur. Cette plaque 40, réalisée en matériau magnétique, apparaît bien en figure 4.

Cette plaque 40 peut être considérée comme étant formée de deux parties P1 et P2, séparées par la ligne A-A et disposées perpendiculairement l'une par rapport à l'autre, qui correspondent chacune au stator d'un moteur bidirectionnel comme celui qui fait l'objet du document US-A- 4 371 821 précité.

La partie P1 présente en effet trois parties polaires 41, 42, et 43, qui sont réunies entre elles par des isthmes 44, 45 et 46, un évidement 47 qui est entouré par une paroi interne sensiblement cylindrique 48, formée par ces parties polaires et ces isthmes, et qui est destiné à recevoir un rotor à aimant permanent bipolaire, et deux encoches diamétralement opposées 49a et 49b prévues dans la paroi interne 48 pour créer deux positions de repos angulairement distantes de 180° pour ce rotor.

De plus, cette partie P1 est conformée et percée de quatre trous 50a, 50b, 50C, 50d pour permettre de fixer sur elle, par exemple par des vis, deux noyaux entourés chacun par une bobine, qui relieront la partie polaire 41, respectivement, aux parties polaires 42 et 43, en étant situées de part et d'autre de celle-ci et sensiblement parallèles à la ligne A-A.

De la même façon, la partie P2 de la plaque 40 comprend trois parties polaires 51, 52 et 53 qui correspondent respectivement à celles 41, 42 et 43 de la partie P1 mais qui n'ont pas du tout la même forme ni la même grandeur sauf en ce qui concerne la partie 51 qui ne diffère que très peu de la partie 46.

On retrouve également dans cette partie P2 trois isthmes 54, 55 et 56 qui relient deux à deux les parties polaires 51, 52 et 53, un évidement 57 délimité par une paroi interne 58 essentiellement cylindrique et de même diamètre que celle, 48, de la partie P1, pour le logement d'un autre rotor à aimant bipolaire, deux encoches 59a et 59b diamètralement opposées dans la paroi 58 et des trous 60a, 60b, 60C et 60d pour la fixation de deux autres noyaux entourés de deux autres bobines qui relieront la partie polaire 51 aux parties polaires 52 et 53, en étant placés de chaque côté de cette partie 51, mais qui seront, eux, sensiblement perpendiculaires à la ligne A-A. De plus, la plaque 40 comporte un autre trou cylindrique 61 de façon que son axe soit à égale distance de ceux des évidements 47 et 57.

En regardant la figure 4, il est facile de s'apercevoir qu'à cause des évidements 47 et 57, de la fente 62, de la cavité 63 et des quatre entailles plus ou moins profondes 64, 65, 66 et 67, ce stator présente normalement toute une zone particulièrement fragile, englobant tous ces vides, dans laquelle il peut facilement se plier ou se tordre, principalement au niveau des isthmes où il peut même aller jusqu'à se casser, lorsqu'il est manipulé avec d'autres, sans précaution. Cela nécessite la présence d'une plaque de renforcement 68 amagnétique.

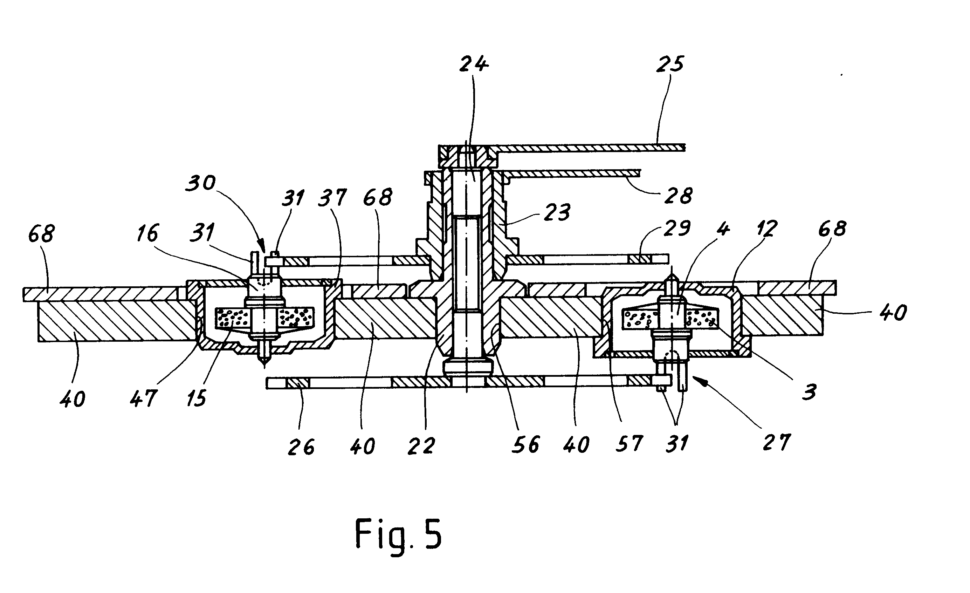

On monte sur la plaque 40 renforcée les quatre bobines 70, 71, 72 et 73 et les cages 12 et 37 équipées respectivement de leur rotor 3 et 15 comme cela est montré sur les figures 3 et 5, les cages étant montées de manière inverse, comme c'était le cas dans le premier mode d'exécution.

Comme on le voit bien en figure 5, le tube de guidage 22 n'est plus fixé sur une platine comme c'était le cas dans le premier mode d'exécution, mais est forcé dans le trou 56 de la plaque 40. A l'intérieur et à l'extérieur de ce tube sont disposés respectivement l'arbre 24 et le canon 23 qui reçoivent d'un côté les aiguilles 25 et 28 et de l'autre côté les roues dentées 26 et 29. Dans ce mode d'exécution on voit que les roues 26 et 29 sont situées coaxialement de part et d'autre de la plaque 40 qui est le stator unique des deux moteurs.

On terminera cette description par quelques remarques qui s'appliquent aux deux modes d'exécution envisagés plus haut.

On constate tout d'abord que si le tube de guidage 22 est disposé à égale distance des arbres 4 et 16 des rotors 3 et 15, les roues dentées 26 et 29 présentent même diamètre et même denture. Ceci présente un avantage puisque ces roues peuvent alors être réalisées par le même outil.

On a déjà dit que l'aiguille 25 indique la minute et l'aiguille 28 l'heure. Dans ce cas on s'arrange pour envoyer au rotor 3 une impulsion par minute et au rotor 15 une impulsion toutes les six minutes. Ce mode de fonctionnement convient à un garde-temps affichant l'heure et la minute. On pourrait cependant appliquer au rotor 3 une impulsion par seconde et l'aiguille 25 deviendrait une aiguille de secondes; de même on pourrait appliquer au rotor 15 une impulsion par minute de sorte que l'aiguille 28 deviendrait une aiguille de minutes, transformant ainsi le garde-temps en chronographe.

Tout-à-fait généralement, le montage en tête-bêche des arbres des rotors permet, on le voit sur les dessins en coupe des figures 2 et 5, de réduire au maximum le nombre de pièces mécaniques en mouvement de même que l'encombrement en hauteur de la pièce d'horlogerie. On réalise ainsi des économies en réduisant ce nombre de pièces, tout en simplifiant la construction et le montage de la pièce d'horlogerie.

**Revendications**

1. Pièce d'horlogerie à affichage analogique comportant au moins deux moteurs électromagnétiques (1, 2), lesdits moteurs comportant chacun un rotor aimanté (3, 15) monté à rotation autour d'un arbre (4, 16) et un stator formé d'une plaque (5, 17) comportant au moins deux épanouissements polaires (6, 7; 18, 19) entourant le rotor, ladite plaque étant couplée magnétiquement à au moins un noyau (10, 20) sur lequel est enroulée une bobine d'excitation (11, 21), caractérisée par le fait qu'elle comporte en outre un tube de guidage (22) arrangé pour recevoir, à l'intérieur, un arbre (24) à la première extrémité duquel est emmanchée une aiguille (25) propre à indiquer une première unité de temps et à la seconde extrémité duquel est assujettie une première roue dentée (26) en prise avec un premier pignon (27) placé en bout de l'arbre de l'un des rotors (3), et à l'extérieur, un canon (23) à la première extrémité duquel est emmanchée une aiguille (28) propre à indiquer une seconde unité de temps et à la seconde extrémité duquel est assujettie une seconde roue dentée (29) en prise avec un second pignon (30) placé en bout de l'arbre de l'autre des rotors (15), les arbres desdits rotors étant disposés en tête-bêche de telle manière que l'extrémité libre dudit premier pignon s'étende dans une direction opposée à celle dans laquelle s'étend l'extrémité libre dudit second pignon.

2. Pièce d'horlogerie selon la revendication 1, caractérisée par le fait que le tube de guidage (22) est disposé à égale distance des arbres (4, 16) des rotors (3, 15) et que les première et seconde roues dentées (26, 29) présentent même diamètre et même denture.

3. Pièce d'horlogerie selon la revendication 1, caractérisée par le fait que les moteurs sont des unités indépendantes comportant chacun un stator (5, 17) et un rotor (3, 15), chaque unité étant fixée sur une platine (34) sur laquelle est fixé le tube de guidage (22).

4. Pièce d'horlogerie selon la revendication 1, caractérisée par le fait que les stators des moteurs sont découpés dans une plaque unique (40), la découpe étant arrangée de façon à présenter les épanouissements polaires nécessaires au fonctionnement indépendant de chaque moteur et que le tube de guidage (22) est fixé sur ladite plaque unique.

5. Pièce d'horlogerie selon la revendication 3 ou la revendication 4, caractérisée par le fait que chaque stator (5, 17) comporte un seul noyau (10, 20) autour duquel est enroulée une bobine (11, 21).

6. Pièce d'horlogerie selon la revendication 3 ou la revendication 4, caractérisée par le fait que chaque stator comporte deux noyaux autour de chacun desquels est enroulée une bobine (70, 71; 72, 73).

7. Pièce d'horlogerie selon la revendication 1, caractérisée par le fait que l'aiguille (25) emmanchée sur l'arbre (24) passant à l'intérieur du tube de guidage (22) est une aiguille des minutes, que l'aiguille (28) emmanchée sur le canon (23) disposé à l'extérieur du tube de guidage est une aiguille des heures et que ladite pièce d'horlogerie présente les fonctions d'un garde-temps.

8. Pièce d'horlogerie selon la revendication 1, caractérisée par le fait que l'aiguille (25) emmanchée sur l'arbre (24) passant à l'intérieur du tube de guidage (22) est une aiguille des secondes, que l'aiguille (28) emmanchée sur le canon (23) disposé à l'extérieur du tube de guidage est une aiguille des minutes et que ladite pièce d'horlogerie présente les fonctions d'un chronographe.

**Patentansprüche**

1. Uhr mit Analoganzeige, umfassend mindestens zwei elektromagnetische Motoren (1, 2), die jeweils einen magnetisierten Rotor (3, 15) umfassen, welcher um eine Welle (4, 16) drehbeweglich ist und einen Stator, gebildet von einer Platte (5, 17) mit mindestens zwei Polstücken (6, 7, 18, 19), welche den Rotor umgeben, umfassen, welche Platte magnetisch mit mindestens einem Kern (10, 20) gekoppelt ist, auf den eine Erregerspule (11, 21) gewickelt ist, dadurch gekennzeichnet, daß sie ferner ein Führungsrohr (22) umfaßt, das für die Aufnahme in seinem Inneren einer Welle (24) ausgebildet ist, an deren erstem Ende ein Zeiger (25) für die Anzeige einer ersten Zeiteinheit angebracht ist und an deren anderem Ende ein erstes Zahnrad (26) im Eingriff mit einem ersten Ritzel (27) angebracht ist, das am Ende der Welle eines der Rotoren (3) plaziert ist und auf seinem Äußeren, einer Nabe (23), an deren erstem Ende ein Zeiger (28) für die Anzeige einer zweiten Zeiteinheit angebracht ist und an deren zweitem Ende ein zweites Zahnrad (29) im Eingriff mit einem zweiten Ritzel (30) angebracht ist, das am Ende der Welle des anderen Rotors (15) plaziert ist, anbei die Wellen der Rotoren derart gegeneinander umgedreht angeordnet sind, daß das freie Ende des ersten Ritzels sich in einer Richtung erstreckt entgegen derjenigen, in der sich das freie Ende des zweiten Ritzels erstreckt.

2. Uhr nach Anspruch 1, dadurch gekennzeichnet, daß das Führungsrohr (22) mit gleichem Abstand von den Wellen (4, 16) der Rotoren (3, 15) angeordnet ist und daß das erste und das zweite Zahnrad (26, 29) gleichen Durchmesser und gleiche Verzahnung aufweisen.

3. Uhr nach Anspruch 1, dadurch gekennzeichnet, daß die Motoren voneinander unabhängige Einheiten sind, mit jeweils einem Stator (5, 17) und einem Rotor (3, 15), wobei jede Einheit auf einer Platine (34) befestigt ist, auf der das Führungsrohr (22) befestigt ist.

4. Uhr nach Anspruch 1, dadurch gekennzeichnet, daß die Statoren der Motoren aus einer einzigen Platte (40) ausgeschnitten sind, wobei der Schnitt derart ausgebildet ist, daß die für die unabhängige Funktion jedes Motors erforderlichen Polstücke vorhanden sind und daß das Führungsrohr (22) auf der einzigen Platte befestigt ist.

5. Uhr nach Anspruch 3 oder Anspruch 4, dadurch gekennzeichnet, daß jeder Stator (5, 17) einen einzigen Kern (10, 20) aufweist, auf den eine Spule (11, 21) gewickelt ist.

6. Uhr nach Anspruch 3 oder Anspruch 4, dadurch gekennzeichnet, daß jeder Stator zwei Kerne umfaßt, auf die jeweils eine Spule (70, 71, 72, 73) gewickelt ist.

7. Uhr nach Anspruch 1, dadurch gekennzeichnet, daß der Zeiger (25), der auf die im Inneren des Führungsrohres (22) sitzende Welle (24) aufgepreßt ist, ein Minutenzeiger ist, daß der auf die Nabe (23), die sich außerhalb des Führungsrohres befindet, aufgesetzte Zeiger ein Stundenzeiger ist und daß die Uhr die Funktion eines Zeitanzeigers aufweist.

8. Uhr nach Anspruch 1, dadurch gekennzeichnet, daß der auf die das Innere des Führungsrohres (22) durchsetzende Welle (24) aufgesetzte Zeiger (25) ein Sekundenzeiger ist, daß der auf die außerhalb des Führungsrohres liegende Nabe (23) aufgesetzte Zeiger (28) ein Minutenzeiger ist und daß die Uhr die Funktion eines Kurzzeitmessers aufweist.

**Claims**

1. Timepiece having an analog display including at least two electromagnetic motors (1, 2), each of said motors including a magnetized rotor (3, 15) mounted for rotation about a shaft (4, 16) and a stator formed by a plate (5, 17) including at least two polar expansions (6, 7; 18, 19) surrounding the rotor, said plate being magnetically coupled to at least one core (10, 20) on which is wound an excitation coil (11, 21), characterized by the fact that it includes a guide tube (22) arranged to receive, in its interior, a shaft (24) on the first end of which is fixed a hand (25) suited to indicate a first unit of time and on the second end of which is secured a first toothed wheel (26) in mesh with a first pinion (27) placed at the end of the shaft of one of the rotors (3), and, on its exterior, a pipe (23) on the first end of which is fixed a hand (28) suited to indicate a second unit of time and on the second end of which is secured a second toothed wheel (29) in mesh with a second pinion (30) placed at the end of the shaft of the other rotor (15), the shafts of said rotors being arranged head-to-foot in a manner such that the free end of said first pinion extends in the direction opposite to that in which extends the free end of said second pinion.

2. Timepiece according to claim 1, characterized by the fact that the guide tube (22) is arranged equidistant from the shafts (4, 16) of the rotors (3, 15) and that the first and second toothed wheels (26, 29) each have the same diameter and the same toothing.

3. Timepiece according to claim 1, characterized by the fact that the motors are independent units each including a stator (5, 17) and a rotor (3, 15), each unit being secured on a base plate (34) on which is secured the guide tube (22).

4. Timepiece according to claim 1, characterized by the fact that the stators of the motors are blanked in a single plate (40), the cutting being arranged so as to exhibit the polar expansions required for independent functioning of each motor and that the guide tube (22) is secured on said single plate.

5. Timepiece according to claim 3 or to claim 4, characterized by the fact that each stator ( 5, 17 ) includes a single core (10, 20) around which a coil (11, 21) is wound.

6. Timepiece according to claim 3 or to claim 4, characterized by the fact that each stator includes two cores around each of which a coil (70, 71; 72, 73) is wound.

7. Timepiece according to claim 1, characterized by the fact that the hand (25) fixed to the shaft (24) passing through the interior of the guide tube (22) is a minutes hand, that the hand (28) fixed to the pipe (23) arranged on the exterior of the guide tube is an hours hand and that said timepiece functions as a time keeper.

8. Timepiece according to claim 1, characterized by the fact that the hand (25) fixed to the shaft (24) passing through the interior of the guide tube (22) is a seconds hand, that the hand (28) fixed to the pipe (23) arranged on the exterior of the guide tube is an minutes hand and that said timepiece functions as a chronograph.

Fig. 1

Fig. 2

EP 0 393 605 B1

Fig.3

Fig. 4

Fig. 5